Europäisches Patentamt

European Patent Office

Office européen des brevets

(19)

(11) EP 0 524 204 B1

(12) **EUROPÄISCHE PATENTSCHRIFT**

(45) Veröffentlichungstag und Bekanntmachung des Hinweises auf die Patenterteilung:
**17.01.1996 Patentblatt 1996/03**

(21) Anmeldenummer: **91906473.3**

(22) Anmeldetag: **05.04.1991**

(51) Int Cl.6: **G01B 21/08**, G01B 11/06

(86) Internationale Anmeldenummer:
**PCT/DE91/00292**

(87) Internationale Veröffentlichungsnummer:
**WO 91/15733 (17.10.1991 Gazette 1991/24)**

(54) **VERFAHREN ZUM KALIBRIEREN EINER DICKENMESSEINRICHTUNG**

PROCESS FOR CALIBRATING A THICKNESS TESTER

PROCEDE D'ETALONNAGE D'UN APPAREIL SERVANT A MESURER L'EPAISSEUR

(84) Benannte Vertragsstaaten:
**DE FR GB**

(30) Priorität: **11.04.1990 DE 4011717**

(43) Veröffentlichungstag der Anmeldung:
**27.01.1993 Patentblatt 1993/04**

(73) Patentinhaber: **Micro-Epsilon Messtechnik GmbH & Co. Kommanditgesellschaft D-94496 Ortenburg (DE)**

(72) Erfinder:
- **WISSPEINTNER, Karl**
  **D-8359 Ortenburg (DE)**
- **MANDEL, Roland**
  **D-8359 Ortenburg (DE)**

(74) Vertreter: **Naumann, Ulrich, Dr.-Ing. D-69115 Heidelberg (DE)**

(56) Entgegenhaltungen:
DE-A- 3 324 701     US-A- 4 276 480
US-A- 4 311 392

- **Patent Abstracts of Japan, Band 9, Nr. 186 (P-377)(1909), 2. August 1985; & JP- A-6057203**
- **Patent Abstracts of Japan, Band 13, Nr. 397 (P-928)(3745), 5. September 1989; & JP-A-1143908**
- **Patent Abstracts of Japan, Band 12, Nr. 133 (P-693), 22. April 1988; & JP-A- 62255806**

**Beschreibung**

Die vorliegende Erfindung betrifft ein Verfahren zum Kalibrieren einer Dickenmeßeinrichtung. Die vorliegende Erfindung betrifft insbesondere ein Verfahren zum Kalibrieren einer Dickenmeßeinrichtung mit zwei berührungslos oder tastend arbeitenden Wegmeßsensoren.

Desweiteren betrifft die vorliegende Erfindung eine Dickenmeßeinrichtung zur Dickenmessung bzw. Überwachung von Schichtdicken, Bändern, Folien oder dgl. mit mindestens zwei berührungslos oder tastend arbeitenden, nebeneinander oder einander gegenüberliegend angeordneten Wegmeßsensoren, insbesondere zur Durchführung des erfindungsgemäßen Verfahrens.

Dickenmeßeinrichtungen sind in den verschiedensten Ausführungen aus der Praxis bekannt und arbeiten entweder berührungslos oder tastend.

Aus der US-A-4 276 480 ist ein Verfahren zur Bestimmung von Materialeigenschaften bekannt, das insbesondere zur Überwachung von in einem kontinuierlichen Herstellungsprozeß gefertigten Folienmaterialien eingesetzt wird. Insbesondere wird in der US-A-4 276 480 ein Verfahren zur Dickenmessung derartiger Folien mit Hilfe einer optischen Sensoranordnung beschrieben. Die Sensoranordnung wird nach diesem Verfahren immer quer zur Förderrichtung des Folienmaterials über die gesamte Bahnbreite geführt. Dabei ändert sich nicht nur der Abstand x der Sensoranordnung zu einer definierten Randlage, sondern auch der Abstand $D_1$ der Sensoranordnung zur Materialbahn. Diese Veränderungen des Abstandes $D_1$ (x) zur Materialbahn in Abhängigkeit von der jeweiligen Position x der Sensoranordnung ist in erster Linie konstruktionsbedingt und auf die Realisierung des Führungsmechanismus der Sensoranordnung zurückzuführen.

Ziel der in den Spalten 20 bis 22 der US-A-4 276 480 beschriebenen Kalibrierung ist es, für eine bestimmte Meßeinrichtung die Funktion $D_1$ (x) zu bestimmen, um bei der Auswertung der von der Sensoranordnung in einer bestimmten Position x erfaßten Meßwerte den entsprechenden Abstand $D_1$ (x) der Sensoranordnung von der Materialbahn zu berücksichtigen.

Druckschrift D1: Patent Abstracts of Japan, Band 9, Nr. 186, (p-377) (1909), 02. 08. 1985 beschreibt ein Verfahren und eine Vorrichtung zur Dickenmessung von plattenartigem Material. Die Vorrichtung weist zwei Wegmeßsensoren (distance sensors) auf, die entlang von Führungsschienen oberhalb und unterhalb des Meßobjektes (plate-like material) bewegbar sind. Es ist ferner ein Referenzobjekt (standard plate) vorgesehen, das in einer bezüglich dem Abstand zu den Wegmeßsensoren der Position des Meßobjektes entsprechenden Position angeordnet ist. Das Referenzobjekt dient hier nicht zur Kalibrierung, sondern zur Vorgabe einer Solldicke des Meßobjektes.

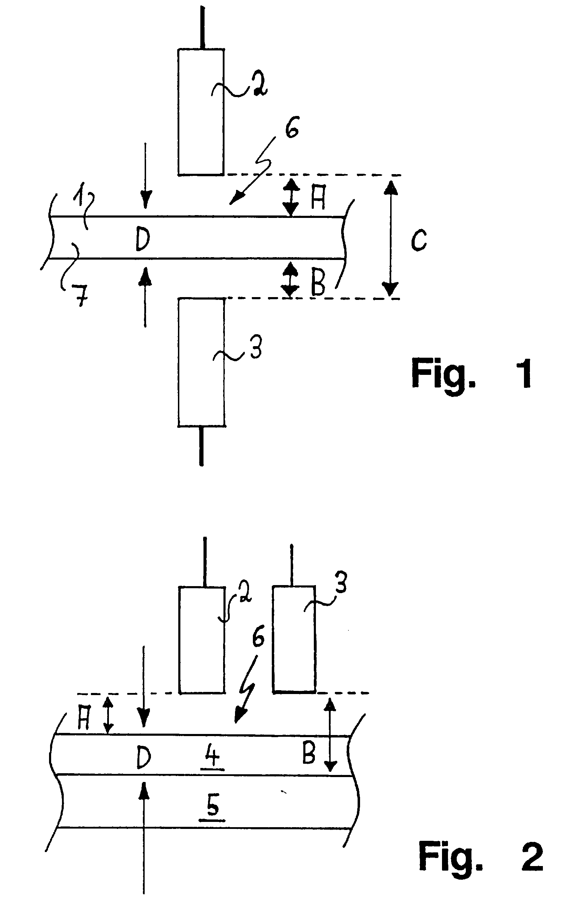

Im Falle der Banddickenmessung bzw. Banddickenüberwachung werden laufende Bänder üblicherweise mit zwei einander gegenüberliegend angeordneten Wegmeßsensoren in ihrer Dicke vermessen. Dabei wird gemäß der Darstellung in Fig. 1 die Dicke D aus den Abständen A, B der beiden Sensoren zu dem zu überwachenden Band und aus dem Abstand C der Wegmeßsensoren zueinander ermittelt. Die Rechenoperation zur Ermittlung der Banddicke D lautet

$$D = C - (A + B)$$

Je nach B andmaterial, Bandgeschwindigkeit, Umwelt und geforderter Genauigkeit sind bei der Dickenmessung unterschiedliche Meßprinzipien, d.h. nach unterschiedlichen Meßprinzipien arbeitende Wegmeßsensoren, anzuwenden.

Im Falle hinsichtlich ihrer Dicke zu überwachender Metallbänder lassen sich bei geringer Bandgeschwindigkeit und unempfindlicher Bandoberfläche induktive Meßtaster mit rollender oder gleitender Tastspitze verwenden. Bei empfindlicher Bandoberfläche und/oder hoher Bandgeschwindigkeit und/oder zu vermeidender Krafteinwirkung auf das zu überwachende Band werden berührungslos arbeitende Dickenmeßeinrichtungen mit Wirbelstromsensoren, kapazitiven oder optischen Sensoren verwendet, die beim Band keinen Verschleiß hervorrufen.

Sollen dagegen nicht-metallische Bänder hinsichtlich ihrer Dicke überwacht werden, arbeitet die Dickenmeßeinrichtung üblicherweise dann mit induktiven Meßtastern, wenn das Band mit geringer Geschwindigkeit transportiert wird oder wenn es eine unempfindliche Oberfläche aufweist. Bei empfindlicher Bandoberfläche, weichem Bandmaterial, sauberer Umwelt, hoher Bandgeschwindigkeit und unerwünschter Krafteinwirkung auf das Band wird meist berührungslos mit kapazitiven oder optischen Sensoren gemessen. Im Rahmen der berührungslosen Abstandsmessung ist es auch möglich, einen mit konstantem Abstand über dem Band schwebenden Wirbelstromsensor zu verwenden.

Die voranstehenden Ausführungen gelten selbstverständlich auch für Dickenmessungen an Folien und für Schichtdickenmessungen von Isolierstoffen auf leitfähigen Materialien.

Die in den bekannten Dickenmeßeinrichtungen verwendeten Wegmeßsensoren sind jedoch in der Praxis problematisch, da sie innerhalb ihres Meßbereichs ein nichtlineares Verhalten zeigen. Durch Flattern des zu überwachenden Bandes, durch unterschiedliche Banddicken oder durch Bewegung des Bandes zu den Wegmeßsensoren hin oder von den Wegmeßsensoren weg werden von den Wegmeßsensoren unterschiedliche Abstände gemessen. Diese unterschiedlichen Abstände sind entsprechend dem nichtlinearen Verhalten der Wegmeßsensoren über den Meßbereich hinweg fehlerbehaftet, so daß schließlich die sich aus der voranstehend erörterten Gleichung, d.h. aus den von den Wegmeßsensoren gemessenen Einzelabständen, ergebende Dicke ebenfalls fehlerbehaftet ist.

Bislang hat man versucht, die Nichtlinearität der einzelnen Wegmeßsensoren durch "Durchfahren" des gesamten Meßbereichs jedes der Wegmeßsensoren mittels eines von einer Mikrometerschraube geführten Objektes zu ermitteln und so die Wegmeßsensoren zu kalibrieren. Eine solche Kalibrierung erfolgt aufgrund des apparativen Umstandes entweder im Labor des Geräteherstellers oder vor Ort durch Fachpersonal des Geräteherstellers. Durch Temperaturschwankungen bzw. thermische Verschiebungen am Meßort verursachte Meßfehler, Langzeitdrifts der Wegmeßsensoren oder dgl. werden bei den bekannten Dickenmeßeinrichtungen nicht berücksichtigt. Vielmehr ist ein aufwendiges Nachkalibrieren der bekannten Dickenmeßeinrichtung erforderlich, das zur Berücksichtigung der Umwelt vom Wartungspersonal des Geräteherstellers vor Ort oder unter simulierten Umweltbedingungen im Labor des Herstellers durchgeführt werden muß.

Der Erfindung liegt daher die Aufgabe zugrunde, ein Verfahren zum Kalibrieren einer Dickenmeßeinrichtung anzugeben, mit dem eine Dickenmeßeinrichtung beliebig oft und auf einfache Weise am Meßort kalibriert werden kann. Desweiteren soll eine Dickenmeßeinrichtung angegeben werden, mit der das automatische Kalibrieren am Meßort möglich ist.

Das erfindungsgemäße Verfahren, bei dem die zuvor aufgezeigte Aufgabe gelöst ist, ist durch die Merkmale des Patentanspruches 1 beschrieben. Danach werden zum Kalibrieren einer Dickenmeßeinrichtung mit mindestens zwei berührungslos oder tastend arbeitenden Wegmeßsensoren folgende Verfahrensschritte durchgeführt: In das Meßfeld der Wegmeßsensoren der Dickenmeßeinrichtung wird ein Referenzobjekt mit vorgegebener Dicke verbracht. Anschließend wird das Referenzobjekt innerhalb des Meßfeldes der Wegmeßsensoren bewegt. Dabei wird in beliebig vielen Relativlagen des Referenzobjektes der Abstand zwischen den Wegmeßsensoren und dem Referenzobjekt bzw. die Dicke des Referenzobjektes gemessen. Für jede Relativlage wird die sich aus der Unlinearität der Wegmeßsensoren ergebende Abweichung der Sensormeßwerte von der vorgegebenen Dicke des Referenzobjektes als dem jeweiligen Sensormeßwert zugeordneter Meßfehler gespeichert, so daß bei der Dickenmessung die Unlinearitäten der Sensoren kompensiert werden können.

Erfindungsgemäß ist erkannt worden, daß sich die Unlinearität der Dickenmeßeinrichtung bzw. der dort verwendeten Wegmeßsensoren auf einfache Weise vor Ort kompensieren läßt. Durch ein hinsichtlich seiner Dicke in etwa dem später zu überwachenden bzw. zu messenden Objekt entsprechendes Referenzobjekt mit bekannter Dicke wird der Meßbereich der Wegmeßsensoren "durchfahren", so daß zu jeder Relativlage des Referenzobjektes zu den Wegmeßsensoren die Abweichung der Meßwerte von dem tatsächlichen Abstand zu dem Referenzobjekt bzw. zu der bekannten Dicke, als durch die Unlinearität der Wegmeßsensoren hervorgerufener Meßfehler ermittelt wird. Dieser Meßfehler wird als dem jeweiligen Sensormeßwert zugeordneter Meßfehler gespeichert, so daß bei der Dickenmessung die Unlinearitäten der Wegmeßsensoren dadurch kompensiert werden können, daß die jeweiligen Meßwerte mittels der ermittelten Meßfehler durch Addition oder Substraktion bereinigt werden.

Die nachgeordneten Patentansprüche 2 bis 11 enthalten vorteilhafte Ausgestaltungen des erfindungsgemäßen Verfahrens. Danach läßt sich das erfindungsgemäße Verfahren in vorteilhafter Weise dadurch weiterbilden, daß die Bewegung des Referenzobjektes im Meßbereich der Wegmeßsensoren durch Auslenkung des Referenzobjektes mechanisch, vorzugsweise mittels eines Stößels, erfolgt und daß das Referenzobjekt dabei zu den Wegmeßsensoren hin bzw. von den Wegmeßsensoren weg bewegt wird. In diesem Falle wird das Referenzobjekt über eine eigens dafür vorgesehene Vorrichtung ausgelenkt. Bei einander gegenüberliegend angeordneten Sensoren (vgl. Fig. 1) bedeutet dies, daß das Referenzobjekt zwischen den Sensoren hin und her bewegt wird. Dadurch wird das Referenzobjekt im Meßbereich der Sensoren bewegt, so daß zu jeder Relativlage des Referenzobjektes zu den Sensoren die Abweichung von der tatsächlichen Dicke des Referenzobjektes, d.h. der Meßfehler der Dickenmeßeinrichtung, ermittelt werden kann.

Ebenso läßt sich die Bewegung des Referenzobjektes im Meßbereich der Wegmeßsensoren durch Auslenkung des Referenzobjektes mittels eines Magneten erreichen. Das Referenzobjekt wird dabei ebenfalls zu den Wegmeßsensoren hin bzw. von den Wegmeßsensoren weg bewegt. In diesem Falle muß entweder das Referenzobjekt selbst oder eine Halterung für das Referenzobjekt magnetisch beeinflußbar sein. Die Auslenkung des Referenzobjektes könnte in besonders vorteilhafter Weise auch pneumatisch oder durch auf die Oberfläche des Referenzobjektes gespritztes Wasser erfolgen.

In besonders vorteilhafter Weise wird das Referenzobjekt parallel zu den aktiven Flächen der Wegmeßsensoren in deren Meßfeld, d.h in Förderrichtung eines später zu messenden Objektes, bewegt. Unebenheiten des Referenzobjektes selbst, ein Flattern des Referenzobjektes beim Bewegen oder bewußt hervorgerufene Bewegungen des Referenzobjektes orthogonal zu dessen eigentlicher Förderrichtung bewirken das "Durchfahren" des Meßbereichs der Wegmeßsensoren, so daß hierbei der den jeweiligen Relativpositionen des Referenzobjektes zu den Wegmeßsensoren zuzuordnende Meßfehler in besonders vorteilhafter Weise ermittelbar ist.

Vor der eigentlichen Dickenmessung könnte das Referenzobjekt automatisch in das Meßfeld der Wegmeßsensoren hineinbewegt werden. Zur Ermittlung der durch die Unlinearität der Wegmeßsensoren hervorgerufenen Meßfehler würde dann das Referenzobjekt entsprechend voranstehender Ausführungen durch das Meßfeld hindurchbewegt und auch wieder aus dem Meßfeld herausbewegt werden.

Nun sollen mit einer Dickenmeßeinrichtung Bänder, Folien oder Schichten mit unterschiedlichen Schichtdicken gemessen bzw. überwacht werden. Zur Eingrenzung des Meßbereichs der Wegmeßsensoren ist es erforderlich, beim Kalibrieren der Dickenmeßeinrichtung Referenzobjekte einzusetzen, die in etwa die Dicke des jeweils zu überwachenden Objektes aufweisen. Folglich sind je nach Dicke der zu überwachenden Objekte unterschiedlich dicke Referenzobjekte zum Kalibrieren zu verwenden. Diese könnten bei einer universellen Dickenmeßeinrichtung in vorteilhafter Weise aus einem mehrere Referenzobjekte mit unterschiedlichen Dicken aufweisenden Magazin ausgewählt werden. Die Vorkehrung eines solchen Magazins mit unterschiedlich dicken Referenzobjekten würde einen Beitrag zur vollautomatischen Auslegung einer Dickenmeßeinrichtung liefern.

Hinsichtlich eines vollautomatischen Dickenmeßbetriebes wäre es besonders vorteilhaft, wenn die Kalibrierung der Dickenmeßeinrichtung bei auswählbaren Referenzobjekten in vorgebbaren Zeitabständen erfolgen würde, so daß eine ständige Anpassung der Wegmeßsensoren an Umwelteinflüsse oder Langzeitdrifts erfolgt. Eine solche Dickenmeßeinrichtung wäre dann völlig unabhängig von irgendwelchen Nachkalibrierungsarbeiten seitens herstellerseitigem Personal.

Ebenso könnte als Referenzobjekt das hinsichtlich seiner Dicke zu überwachende Band bzw. die zu überwachende Folie verwendet werden. Dabei wäre dann der Soll-Wert des zu überwachenden Bandes bzw. der zu überwachenden Folie als Referenzwert vorzugeben.

Da bei ortsfesten Wegmeßsensoren der Abstand des einen Wegmeßsensors vom Referenzobjekt bzw. vom zu überwachenden Objekt eine lineare Funktion des Abstandes des anderen Wegmeßsensors vom Referenzobjekt bzw. vom zu überwachenden Objekt ist, genügt es, wenn zur Kompensation der Unlinearitäten der Wegmeßsensoren lediglich die den Meßwerten eines der Wegmeßsensoren zugeordneten Meßfehler herangezogen werden.

Sollen nun Bänder oder Folien überwacht werden, für die keine Referenzobjekte mit entsprechenden Dikken vorhanden sind, lassen sich die aus den Meßfehlern bei verfügbaren Referenzobjekten mit vorgegebenen Dicken ermittelten Kennlinien der Meßfehler für nicht verfügbare Zwischengrößen linear hochrechnen. Dazu eignen sich insbesondere bekannte Interpolationsverfahren, z.B. mittels eines aus der Bildverarbeitung bekannten zweidimensionalen Mittelwertfilters.

Hinsichtlich des erfindungsgemäßen Verfahrens ist schließlich zu erwähnen, daß in vorteilhafter Weise die sich für jede Relativlage eines Referenzobjektes aus der Unlinearität der Wegmeßsensoren ergebende Abweichung der Sensormeßwerte von der vorgegebenen Dikke des Referenzobjektes als den Sensormeßwerten zugeordnete Meßfehler in digitalisierter Form in einem eigens dafür vorgesehenen Speicher abgelegt werden.

Die erfindungsgemäße Dickenmeßeinrichtung, bei der die hier zugrundeliegende Aufgabe gelöst ist, ist durch die Merkmale des Patentanspruches 12 beschrieben. Danach ist bei einer Dickenmeßeinrichtung zur Dik-

kenmessung bzw. Überwachung von Schichtdicken, Bändern, Folien oder dgl. mit mindestens zwei berührungslos oder tastend arbeitenden, nebeneinander oder einander gegenüberliegend angeordneten Wegmeßsensoren, eine Vorrichtung zum automatischen Einführen eines Referenzobjektes in das Meßfeld der Wegmeßsensoren vorgesehen. Mit einer solchen Dickenmeßeinrichtung läßt sich das voranstehend beschriebene erfindungsgemäße Verfahren durchführen.

In besonders vorteilhafter Weise weist die Vorrichtung zum automatischen Einführen von Referenzobjekten der erfindungsgemäßen Dickenmeßeinrichtung eine Fördereinrichtung auf, mit der das Referenzobjekt im Meßfeld der Wegmeßsensoren verfahren wird.

Zur vollautomatischen Kalibrierung ist ein Magazin mit mehreren Referenzobjekten unterschiedlicher Dicke vorgesehen. Die Vorrichtung zum automatischen Einführen greift auf die im Magazin enthaltenen Referenzobjekte wahlweise zu.

Werden Schichtdicken von Isolierstoffen auf einem elektrisch leitfähigen Material gemessen, so sind in besonders vorteilhafter Weise die Wegmeßsensoren nebeneinander und dem Referenzobjekt bzw. dem Meßobjekt gegenüberliegend angeordnet. Dabei ist der eine Wegmeßsensor kapazitiv und der andere Wegmeßsensor nach dem Wirbelstromprinzip arbeitend ausgeführt.

Desweiteren ist bei der erfindungsgemäßen Dickenmeßeinrichtung ein Datenspeicher vorgesehen, so daß die sich für jede Relativlage eines Referenzobjektes aus der Unlinearität der Wegmeßsensoren ergebenden Abweichungen der Sensormeßwerte von der vorgegebenen Dicke des Referenzobjektes als den Sensormeßwerten zugeordnete Meßfehler in digitalisierter Form in diesem Datenspeicher ablegen lassen. Der Datenspeicher ist vorzugsweise zweidimensional als Matrixspeicher organisiert. Berücksichtigt man weiter unterschiedliche Dicken verschiedener Referenzobjekte, dann ist der Datenspeicher dreidimensional aufzubauen.

Zwischen den unterschiedlichen Dicken und den diesen Dicken über den gesamten Meßbereich zugeordneten Meßfehlern lassen sich die Meßfehler linearisieren, wodurch sich auf einfache Weise "Zwischenwerte" berechnen lassen.

Es gibt nun verschiedene weitere Möglichkeiten, den Gegenstand der vorliegenden Erfindung in vorteilhafter Weise auszugestalten und weiterzubilden. Dazu ist einerseits auf die nachgeordneten Patentansprüche, andererseits auf die Erläuterung von Ausführungsbeispielen der erfindungsgemäßen Lehre anhand der Zeichnung zu verweisen. In Verbindung mit der Erläuterung der bevorzugten Ausführungsbeispiele der Erfindung anhand der Zeichnung werden auch im allgemeinen bevorzugte Ausgestaltungen der Lehre erläutert. In der Zeichnung zeigt

Fig. 1     in einer schematischen Darstellung ein Prinzip der Dickenmessung, wobei die Sensoranordnung ein erstes Ausführungsbeispiel einer erfindungsgemäßen Dickenmeßeinrichtung darstellt,

Fig. 2 in einer schematischen Darstellung ein weiteres Prinzip der Dickenmessung, wobei die Sensoranordnung ein zweites Ausführungsbeispiel einer erfindungsgemäßen Dickenmeßeinrichtung darstellt,

Fig. 3 in einer schematischen Darstellung die Adressierung eines Matrixspeichers zum Ablegen der zur Kompensation erforderlichen Meßfehler bzw. Korrekturwerte bei drei Referenzdikken und

Fig. 4 in einer schematischen Darstellung die Belegung der Matrix, wobei sowohl Korrekturwerte als auch dazugehörenden Häufigkeitswerte abgelegt sind.

Fig. 1 zeigt ein Meßprinzip einer Dickenmeßeinrichtung zur Dickenmessung bzw. Überwachung von Bändern 1. Beidseitig des hinsichtlich seiner Dicke D zu überwachenden Bandes 1 sind zwei berührungslos arbeitende Wegmeßsensoren 2, 3 angeordnet. Diese Wegmeßsensoren 2, 3 liegen bei dem in Fig. 1 gewählten Ausführungsbeispiel einander gegenüber. Ebenso können die Wegmessensoren 2, 3, insbesondere bei der in Fig. 2 dargestellten Schichtdickenmessung von Isolierstoffen 4 auf einem leitfähigen Material 5, auch nebeneinander angeordnet sein.

Bei der erfindungsgemäßen Dickenmeßeinrichtung ist eine Vorrichtung zum automatischen Einführen eines Referenzobjektes in das Meßfeld 6 der Wegmeßsensoren 2, 3 vorgesehen. Bei dieser Vorrichtung kann es sich beispielsweise um eine Fördervorrichtung handeln, die auch das zu überwachende Band 1 fördert. Ebenso könnte dazu eine gesonderte Vorrichtung vorgesehen sein.

Fig. 2 zeigt am Beispiel der Schichtdickenmessung von Isolierstoffen 4 auf einem leitfähigen Material 5, daß die Wegmeßsensoren 2, 3 auch nebeneinander angeordnet sein können. In einem solchen Fall erfolgt die Schichtdickenmessung mit einer kombinierten Sensorik. Bei den Wegmeßsensoren 2, 3 handelt es sich nämlich einerseits um einen kapazitiven Wegmeßsensor 2, andererseits um einen nach dem Wirbelstromprinzip arbeitenden Wegmeßsensor 3. Der nach dem Wirbelstromprinzip arbeitende Wegmeßsensor 3 mißt durch den Isolierstoff 4 hindurch auf die Oberfläche des elektrisch leitenden Materials 5. Der kapazitive Wegmeßsensor 2 mißt dagegen gegen den Isolierstoff 4, da die Kapazität dieses Sensors von dem als Dielektrikum wirkenden Isolierstoff 4 beeinflußt wird. Die Schichtdicke D ergibt sich dann aus der Differenz der beiden gemessenen Abstände A, B.

Zur Kalibrierung einer nach dem in Fig. 1 gezeigten Prinzip arbeitenden Dickenmeßeinrichtung ist es erforderlich, daß ein Referenzobjekt 7 mit bekannter Dicke $D_{ref}$ zur Verfügung steht. Bei dem in den Fig. 1 und 2 gezeigten Band 1 könnte es sich ebenso um das Referenzobjekt 7 handeln. Daher sind die in Rede stehenden Figuren sowohl mit dem Bezugzeichen des Bandes 1 als auch mit dem Bezugzeichen des Referenzobjektes 7 versehen. Aus den von den Wegmeßsensoren 2, 3 gemessenen Abständen A, B und dem Abstand C zwischen den Wegmeßsensoren 2, 3 läßt sich ein Korrekturwert K (A, B) berechnen. A ist eine lineare Funktion von B und umgekehrt, so daß für die Funktion K (A, B) auch K (A) oder K (B) gesetzt werden kann. Mit anderen Worten bedeutet dies, daß der bei der Dickenmessung aufgrund der Unlinearitäten der Wegmeßsensoren 2, 3 auftretende Meßfehler in Abhängigkeit des Meßfehlers nur eines der Wegmeßsensoren 2 oder 3 korrigiert werden kann.

Durch Bewegen des Referenzobjektes 7 der Dicke $D_{ref}$ zwischen den Wegmeßsensoren 2, 3 parallel zu deren aktiven Flächen (d.h. durch Parallelverschiebung) läßt sich die stetige Funktion K (A) oder K (B) aufnehmen, die die Unlinearitäten beider Wegmeßsensoren 2, 3 wiederspiegelt. Durch Addition kompensiert diese Funktion die Unlinearitäten der Dickenmeßeinrichtung wie folgt:

$$D_{ref} = C - (A + B) + \text{Korrekturwert (A, B)}$$

Dieses Verfahren läßt sich erfindungsgemäß auch auf die Dickenmessung mehrerer Objekte mit unterschiedlichen Dicken anwenden. Dazu wird eine Korrekturfunktion K berechnet, die von A oder B und einer variablen Referenzdicke $D_{ref}$ abhängt. Diese Korrekturfunktion

$$K (A, D_{ref}) \text{ oder } K (B, D_{ref})$$

läßt sich mit $D_{ref} \approx C - (A + B)$ näherungsweise umformen in K'(A, B).

Die Dicke des unbekannten Meßobjektes ergibt sich dann aus

$$D = C - (A + B) + K'(A, B),$$

wobei K' näherungsweise nur noch abhängig von A oder von B ist. Mit Hilfe der zweidimensionalen Funktion K'(A, B) lassen sich wesentlich genauere Dickenmessungen durchführen, da Unlinearitäten der beiden Wegmeßsensoren 2, 3 durch K'(A, B) kompensiert werden.

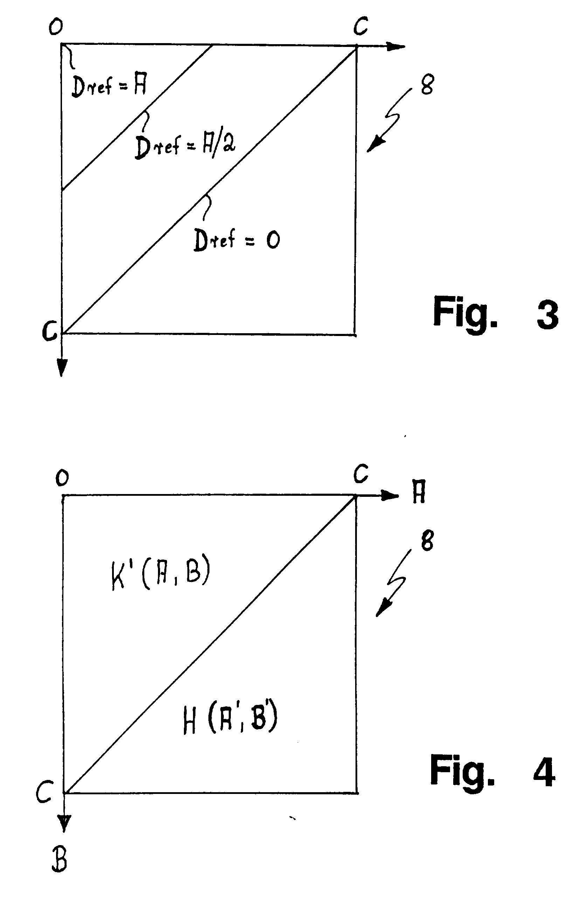

Die zur Kompensation der durch Unlinearität der Wegmeßsensoren 2, 3 verursachten Meßfehler erforderlichen Korrekturwerte können in bevorzugter Weise in digitalisierter Form in einem Speicher 8 abgelegt werden. Dieser Speicher 8 könnte dabei zweidimensional organisiert sein. Die Adressierung eines solchen Matrixspeichers könnte bei drei verschiedenen Referenzdikken ($D_{ref} = 0$, C/2, C) gemäß der Darstellung in Fig. 3 ausgelegt sein.

Bei der Speicherung der Korrekturwerte K in digitalisierter Form ist eine Quantisierung des Korrekturkennlinienfeldes in Ortskoordinaten notwendig. Das Feld der Korrekturwerte läßt sich entsprechend in einer Dreiecksmatrix darstellen. Werden unterschiedliche Dicken von Referenzobjekten berücksichtigt, dann kommt die Dicke des Referenzobjektes als dritte Dimension hinzu, wobei zwischen den unterschiedlichen Dicken bzw. zwischen den Meßfehlern bei unterschiedlichen Dicken linearisiert wird.

Die bei der Linearisierung durch Auslenkung des Referenzobjektes mehrfach anfallenden Korrekturwerte K können zur Mittelung des Korrekturwertes eines Intervalls bzw. einer Quantisierungsstufe verwendet werden. Dazu ist jedoch auch die Speicherung der Häufigkeit von Meßwerten innerhalb eines Quantisierungsintervalls erforderlich. Die Belegung könnte entsprechend der Darstellung in Fig. 4 erfolgen, wobei H (A', B') die Häufigkeitswerte und K'(A, B) die Korrekturwerte sind.

Die Korrekturwerte berechnen sich dann wie folgt:

$$K'(A, B) = D_{ref} - C + A + B \qquad \text{für } H(A', B') = 0$$

$$= K'(A, B) - \frac{K'(A, B)}{H(A', B)} + \frac{(D_{ref} - C + A + B)}{H(A', B')}$$

$$\text{für } H(A', B') > 0$$

$$H(A', B') = H(A', B') + 1$$

Nach der Dickenlinearisierung noch "fehlende" Meßwerte, d.h. Matrixplätze mit H (A', B') = 0, können durch ein zweidimensionales Interpolationsverfahren gefüllt werden. Damit werden durch Linearisierung auch Messungen an Objekten verbessert, mit deren Dicke als Referenzdicke noch nicht linearisiert wurde. Dies gilt insbesondere dann, wenn die Dicken dieser Objekte zwischen als Referenzdicken zur Linearisierung bereits herangezogenen Dicken von Objekten liegen. Die Interpolation kann beispielsweise mit einem aus der Bildverarbeitung bekannten zweidimensionalen Mittelwertfilter erfolgen.

**Patentansprüche**

1. Verfahren zum Kalibrieren einer Dickenmeßeinrichtung mit mindestens zwei berührungslos oder tastend arbeitenden Wegmeßsensoren (2, 3), wobei die Nicht-Linearität der Wegmeßsensoren (2, 3) in Bezug auf den zu messenden Abstand eines Meßobjekts von den Wegmeßsensoren (2, 3) kompensiert wird, **gekennzeichnet durch** folgende Verfahrensschritte:

   Verbringen eines Referenzobjektes (7) mit vorgegebener Dicke ($D_{ref}$) in das Meßfeld (6) der Wegmeßsensoren (2, 3) und
   Bewegen des Referenzobjektes (7) innerhalb des Meßfeldes (6) der Wegmeßsensoren (2, 3), wobei in beliebig vielen Relativlagen des Referenzobjektes (7) zu den Wegmeßsensoren (2, 3) der Abstand (A, B) zwischen den Wegmeßsensoren (2, 3) und dem Referenzobjekt (7) bzw. die Dicke (D) des Referenzobjektes (7) gemessen und für jede Relativlage die sich aus der Nicht-Linearität der Wegmeßsensoren (2, 3) ergebende Abweichung der Sensormeßwerte von der vorgegebenen Dicke ($D_{ref}$) des Referenzobjektes (7) als dem jeweiligen Sensormeßwert zugeordneter Meßfehler K (A, B) gespeichert wird.

2. Verfahren nach Anspruch 1, dadurch gekennzeichnet, daß die Bewegung des Referenzobjektes (7) im Meßbereich der Wegmeßsensoren (2, 3) durch Auslenkung des Referenzobjektes (7) mechanisch, vorzugsweise mittels eines Stößels, erfolgt und daß das Referenzobjekt (7) dabei zu den Wegmeßsensoren (2, 3) hin bzw. von den Wegmeßsensoren (2, 3) weg bewegt wird.

3. Verfahren nach Anspruch 1, dadurch gekennzeichnet, daß die Bewegung des Referenzobjektes (7) im Meßbereich der Wegmeßsensoren (2, 3) durch Auslenkung des Referenzobjektes (7) mittels eines Magneten oder mittels einer Flüssigkeit, vorzugsweise mittels eines Wasserstrahls, erfolgt und daß das Referenzobjekt (7) dabei zu den Wegmeßsensoren (2, 3) hin bzw. von den Wegmeßsensoren (2, 3) weg bewegt wird.

4. Verfahren nach Anspruch 1, dadurch gekennzeichnet, daß das Referenzobjekt (7) parallel zu den aktiven Flächen der Wegmeßsensoren (2, 3) in deren Meßfeld (6), d.h in Förderrichtung eines später zu messenden Objektes, bewegt wird.

5. Verfahren nach Anspruch 1, dadurch gekennzeichnet, daß vor der eigentlichen Dickenmessung das Referenzobjekt (7) automatisch in das Meßfeld (6) hineinbewegt, durch das Meßfeld (6) hindurchbewegt und wieder aus dem Meßfeld (6) herausbewegt wird.

6. Verfahren nach Anspruch 5, dadurch gekennzeichnet, daß das Referenzobjekt (7) aus einem mehrere Referenzobjekte (7) mit unterschiedlichen Dicken ($D_{ref}$) aufweisenden Magazin auswählbar ist.

7. Verfahren nach Anspruch 5 oder 6, dadurch gekennzeichnet, daß die Kalibrierung der Dickenmeßeinrichtung bei auswählbaren Referenzobjekten (7) und in vorgebbaren Zeitabständen automatisch erfolgt, so daß eine ständige Anpassung der Wegmeßsensoren (2, 3) an Umwelteinflüsse oder Langzeitdrifts erfolgt.

8. Verfahren nach einem der Ansprüche 1 bis 5, dadurch gekennzeichnet, daß als Referenzobjekt (7) das hinsichtlich seiner Dicke (D) zu überwachende Band (1) bzw. die zu überwachende Folie verwendet wird, wobei deren Soll-Wert als Referenzwert ($D_{ref}$) vorzugeben ist.

9. Verfahren nach einem der Ansprüche 1 bis 8, dadurch gekennzeichnet, daß zur Kompensation der Nicht-Linearitäten der Wegmeßsensoren (2, 3) lediglich die den Meßwerten eines der Wegmeßsensoren (2 oder 3) zugeordneten Meßfehler herangezogen werden.

10. Verfahren nach einem der Ansprüche 1 bis 9, dadurch gekennzeichnet, daß die aus den Meßfehlern ermittelten Kennlinien vorgegebener Dicken ($D_{ref}$) für Zwischengrößen linear hochgerechnet werden.

11. Verfahren nach einem der Ansprüche 1 bis 10, dadurch gekennzeichnet, daß die sich für jede Relativlage eines Referenzobjektes (7) aus der Nicht-Linearität der Wegmeßsensoren (2, 3) ergebende Abweichung der Sensormeßwerte von der vorgegebenen Dicke ($D_{ref}$) des Referenzobjektes (7) als den Sensormeßwerten zugeordnete Meßfehler in digitalisierter Form in einem Speicher (8) abgelegt werden.

12. Verwendung einer Dickenmeßeinrichtung zur Dickenmessung bzw. Überwachung von Schichtdikken, Bändern (1), Folien oder dgl. mit mindestens zwei berührungslos oder tastend arbeitenden, nebeneinander oder einander gegenüberliegend angeordneten Wegmeßsensoren (2, 3) zur Durchführung des Verfahrens nach einem der Ansprüche 1 bis 11, wobei eine Vorrichtung zum automatischen Einführen eines Referenzobjektes (7) in das Meßfeld (6) der Wegmeßsensoren (2, 3) vorgesehen ist.

13. Verwendung einer Dickenmeßeinrichtung nach Anspruch 12, wobei die Vorrichtung zum automatischen Einführen eine Fördereinrichtung aufweist, mit der das Referenzobjekt (7) im Meßfeld (6) der Wegmeßsensoren (2, 3) verfahren wird.

14. Verwendung einer Dickenmeßeinrichtung nach Anspruch 12 oder 13, wobei ein Magazin mit mehreren Referenzobjekten (7) unterschiedlicher Dicke vorgesehen ist und die Vorrichtung zum automatischen Einführen auf die im Magazin enthaltenen Referenzobjekte (7) wahlweise zugreift.

15. Verwendung einer Dickenmeßeinrichtung, wobei Schichtdicken von Isolierstoffen (4) auf einem elektrisch leitfähigen Material (5) gemessen werden, nach einem der Ansprüche 12 bis 14, wobei die Wegmeßsensoren (2, 3) nebeneinander und dem Referenzobjekt (7) bzw. dem Meßobjekt gegenüberliegend angeordnet sind und der eine Wegmeßsensor (2 oder 3) kapazitiv oder optisch und der andere Wegmeßsensor (2 oder 3) nach dem Wirbelstromprinzip arbeitet.

16. Verwendung einer Dickenmeßeinrichtung nach einem der Ansprüche 12 bis 15, wobei ein Datenspeicher (8) vorgesehen ist und die sich für jede Relativlage eines Referenzobjektes (7) aus der Nicht-Linearität der Wegmeßsensoren (2, 3) ergebende Abweichung der Sensormeßwerte von der vorgegebenen Dicke ($D_{ref}$) des Referenzobjektes (7) als den Sensormeßwerten zugeordnete Meßfehler in digitalisierter Form in diesem Datenspeicher (8) abgelegt werden.

17. Verwendung einer Dickenmeßeinrichtung nach Anspruch 16, wobei der Datenspeicher (8) zweidimensional bzw. unter Berücksichtigung unterschiedlich dicker Referenzobjekte dreidimensional als Matrixspeicher organisiert ist.

**Claims**

1. Method for calibrating a thickness measuring device with at least two displacement measuring sensors (2, 3) operating in a non-contacting or contacting manner, wherein compensation is made for the non-linearity of the displacement measuring sensors (2, 3) in relation to the distance, to be measured, of a measured object, from the displacement measuring sensors (2, 3) characterised by the following steps:

   positioning a reference object (7) of predetermined thickness ($D_{ref}$) in the measuring field (6) of the displacement measuring sensors (2, 3); and
   moving the reference object (7) within the measuring field (6) of the displacement measuring sensors (2, 3);
   the distance (A, B) between the displacement measuring sensors (2, 3) and the reference object (7), or the thickness (D) of the reference object (7), being measured in as many relative positions of the reference object (7) to the displacement measuring sensors (2, 3) as are desired, and for each relative position the deviation of the values measured by the sensor from the predetermined thickness ($D_{ref}$) of the reference object (7), which deviation results from the non-linearity of the displacement measuring sensors (2, 3), is stored as measuring errors K (A, B) allocated to the respective values measured by the sensor.

**2.** Method according to Claim 1, characterised in that the movement of the reference object (7) in the measuring range of the displacement measuring sensors (2, 3) by deflection of the reference object (7) is performed mechanically, preferably by means of a push rod; and in that, in this connection, the reference object (7) is moved toward the displacement measuring sensors (2, 3) or away from the displacement measuring sensors (2, 3).

**3.** Method according to Claim 1, characterised in that the movement of the reference object (7) in the measuring range of the displacement measuring sensors (2, 3) by deflection of the reference object (7) is performed by means of a magnet or by means of a fluid, preferably a water jet; and in that, in this connection, the reference object (7) is moved toward the displacement measuring sensors (2, 3) or away from the displacement measuring sensors (2, 3).

**4.** Method according to Claim 1, characterised in that the reference object (7) is moved parallel to the active surfaces of the displacement measuring sensors (2, 3) in the measuring field (6) thereof, ie. in the direction of advance of an object which is to be measured later.

**5.** Method according to Claim 1, characterised in that prior to the actual thickness measurement the reference object (7) is automatically moved into the measuring field (6), passes through the measuring field (6), and moved out of the measuring field (6) again.

**6.** Method according to Claim 5, characterised in that the reference object (7) may be selected from a magazine containing several reference objects (7) with different thicknesses ($D_{ref}$).

**7.** Method according to Claim 5 or 6, characterised in that the calibration of the thickness measuring device occurs automatically in the case of selectable reference objects (7) and at presettable time intervals, such that the displacement measuring sensors (2, 3) are continuously adapted to environmental influences or long-term drift.

**8.** Method according to one of Claims 1 to 5, characterised in that the tape (1) to be monitored with respect to its thickness (D) or the foil to be monitored is used as reference object (7), it being necessary to input the desired values thereof as a reference value ($D_{ref}$).

**9.** Method according to one of Claims 1 to 8, characterised in that only the measuring errors associated with the measured values of one of the displacement measuring sensors (2 or 3) are used to compensate for the non-linearities of the displacement measuring sensors (2, 3).

**10.** Method according to one of Claims 1 to 9, characterised in that the characteristics of predetermined thicknesses ($D_{ref}$) which are determined from the measuring errors, are linearly extrapolated for intermediate sizes.

**11.** Method according to one of Claims 1 to 10, characterised in that for each relative position of a reference object (7) the deviation of the values measured by the sensor from the predetermined thickness ($D_{ref}$) of the reference object (7), which deviation results from the non-linearity of the displacement measuring sensors (2, 3), is filed in digitized form in a memory (8) as measuring errors allocated to values measured by the sensor.

**12.** Use of a thickness measuring device for measuring the thickness or monitoring layers, tapes (1), foils, or the like, comprising at least two displacement measuring sensors (2, 3) which operate in a non-contacting or contacting manner and are arranged side by side or opposite one another for performing the method as in one of Claims 1 to 11, in which connection a device is provided for automatically feeding a reference object (7) into the measuring field (6) of displacement measuring sensors (2, 3).

**13.** Use of a thickness measuring device according to Claim 12, characterised in that the automatic feed means comprises a transport means by means of which the reference object (7) is conveyed in the measuring field (6) of displacement measuring sensors (2, 3).

**14.** Use of a thickness measuring device according to Claim 12 or 13, characterised in that a magazine with several reference objects (7) of different thickness is provided, and the device for automatic feeding selectively picks the reference objects (7) contained in the magazine.

**15.** Use of a measuring device according to any one of Claims 12 to 14, in the case of which layer thickness of insulating materials (4) on an electrically conductive material (5) are measured, characterised in that the displacement measuring sensors (2, 3) are arranged side by side and opposite to the reference object (7) or the object to be measured, and the one displacement measuring sensor (2 or 3) operates capacitively or optically and the other displacement measuring sensor (2 or 3) operates by the eddy-current principle.

**16.** Use of a thickness measuring device according to any one of Claims 12 to 15, in the case of which a data memory (8) is provided, and for each relative position of a reference object (7) the deviation of the measured sensor values from the predetermined thickness ($D_{ref}$) of the reference object (7) which deviation results from the non-linearity of the displacement measuring sensors (2, 3), is filed in digitized form in this data memory (8) as measuring errors which are allocated to the values measured by the sensor.

**17.** Use of a thickness measuring device according to Claim 16, characterised in that the data memory (8) is organised two-dimensionally or, taking into account measuring objects of different thicknesses, three-dimensionally as a matrix memory.

**Revendications**

**1.** Procédé d'étalonnage d'un appareil servant à mesurer l'épaisseur comportant au moins deux capteurs de mesure de distance (2, 3) fonctionnant sans contact ou par palpeurs, dans lequel la non-linéarité des capteurs de mesure de distance (2, 3) avec référence à la distance d'un objet de mesure qui doit être mesurée est compensée par les capteurs de mesure de distance (2, 3), caractérisées par les phases opératoires suivantes:

Mise en place d'un objet de référence (7) d'une épaisseur de consigne ($D_{ref}$) dans le champ de mesure (6) des capteurs de mesure de distance (2, 3) et rotation de l'objet de référence (7) au sein du champ de mesure (6) des capteurs de mesure de distance (2, 3), opération au cours de laquelle dans les positions relatives d'un nombre choisi à volonté de l'objet de référence (7) par rapport aux capteurs de mesure de distance (2, 3), il est mesuré la distance (A, B) entre les capteurs de mesure de distance (2, 3) et l'objet de référence (7) ou l'épaisseur (D) de l'objet de référence (7) et où pour chaque position relative, l'écart entre les valeurs mesurées par les capteurs et l'épaisseur de consigne ($D_{ref}$) de l'objet de référence (7), écart résultant de la non-linéarité des capteurs de mesure de distance (2, 3), est mis en mémoire en tant qu'erreur de mesure K (A, B) attribuée à la valeur correspondante mesurée par le capteur.

**2.** Procédé suivant la revendication 1, caractérisé en ce que le déplacement de l'objet de référence (7) dans la zone de mesure des capteurs de mesure de distance (2, 3) a lieu par voie mécanique par déviation de l'objet de référence (7), de préférence à l'aide d'un poussoir, et en ce qu'à cette occasion l'objet de référence (7) est soit déplacé en direction des capteurs de mesure de distance (2, 3), soit déplacé dans une direction d'éloignement des capteurs de mesure de distance (2, 3).

**3.** Procédé suivant la revendication 1, caractérisé en ce que le déplacement de l'objet de référence (7) dans la zone de mesure des capteurs de mesure de distance (2, 3) a lieu par déviation de l'objet de référence (7) à l'aide d'un aimant ou à l'aide d'un liquide, de préférence au moyen d'un jet d'eau, et en ce qu'à cette occasion l'objet de référence (7) est soit déplacé en direction des capteurs de mesure de distance (2, 3), soit déplacé dans une direction d'éloignement des capteurs de mesure de distance (2, 3).

**4.** Procédé suivant la revendication 1, caractérisé en ce que l'objet de référence (7) est déplacé parallèlement aux surfaces actives des capteurs de mesure de distance (2, 3) dans le champ de mesure (6) de ces derniers, à savoir dans la direction de transport d'un objet qui doit être mesuré ultérieurement.

**5.** Procédé suivant la revendication 1, caractérisé en ce qu'avant la mesure proprement dite de l'épaisseur, l'objet de référence (7) est mis automatiquement en place dans le champ de mesure (6), est déplacé à travers le champ de mesure (6) et est de nouveau éloigné du champ de mesure (6).

**6.** Procédé suivant la revendication 5, caractérisé en ce que l'objet de référence (7) peut être sélectionné dans un magasin contenant plusieurs objets de référence (7) ayant des épaisseurs ($D_{ref}$) différentes.

**7.** Procédé suivant la revendication 5 ou la revendication 6, caractérisé en ce que l'étalonnage de l'appareil servant à mesurer l'épaisseur a lieu automatiquement avec des objets de référence (7) pouvant être sélectionnés et à des intervalles de temps de consigne, de telle sorte qu'a lieu une adaptation automatique des capteurs de mesure de distance (2, 3) aux influences de l'environnement ou aux dérives à long terme.

**8.** Procédé suivant l'une quelconque des revendications de 1 à 5, caractérisé en ce qu'en tant qu'objet de référence (7) est utilisée la bande ou la feuille (1) dont l'épaisseur (D) doit être contrôlée, opération dans laquelle la valeur de consigne de bande ou feuille doit être choisie en tant que valeur de référence ($D_{ref}$).

**9.** Procédé suivant l'une quelconque des revendications de 1 à 8, caractérisé en ce qu'aux fins de la compensation des non-linéarités des capteurs de mesure de distance (2, 3), seules les erreurs de mesure attribuées à l'un des capteurs de mesure de distance (2 ou 3) sont utilisées.

10. Procédé suivant l'une quelconque des revendications de 1 à 9, caractérisé en ce que les caractéristiques d'épaisseurs de consigne ($D_{ref}$) déterminées sur la base des erreurs de mesure sont extrapolées pour la détermination de valeurs intermédiaires.

11. Procédé suivant l'une quelconque des revendications de 1 à 9, caractérisé en ce que les écarts entre l'épaisseur de consigne ($D_{ref}$) d'un objet de référence (7) et les valeurs mesurées par les capteurs, écarts résultant de la non-linéarité des capteurs de mesure de distance (2, 3), sont pour chaque position relative de l'objet de référence (7) mis sous forme digitalisée en mémoire en tant qu'erreurs de mesure attribuées aux valeurs de mesure des capteurs.

12. Utilisation d'un appareil servant à mesurer l'épaisseur pour la mesure de l'épaisseur ou le contrôle d'épaisseurs de couches, de bandes (1), de feuilles ou similaires avec au moins deux capteurs de mesure de distance (2, 3) fonctionnant sans contact ou par palpeurs, les capteurs étant disposés l'un à côté de l'autre ou l'un en face de l'autre, pour la mise en oeuvre du procédé suivant l'une quelconque des revendications de 1 à 11, où est prévu un appareil pour l'introduction automatique d'un objet de référence (7) dans le champ de mesure (6) des capteurs de mesure de distance (2, 3).

13. Utilisation d'un appareil servant à mesurer l'épaisseur suivant la revendication 12, où l'appareil pour l'introduction automatique comporte une installation de transport, à l'aide de laquelle l'objet de référence (7) est déplacé dans le champ de mesure (6) des capteurs de mesure de distance (2, 3).

14. Utilisation d'un appareil servant à mesurer l'épaisseur suivant la revendication 12 ou la revendication 13, où est prévu un magasin avec plusieurs objets de référence (7) d'épaisseurs différentes et où l'appareil pour l'introduction automatique sélectionne à volonté les objets de référence (7) contenus dans le magasin.

15. Utilisation d'un appareil servant à mesurer l'épaisseur, pour la mesure des épaisseurs de couches de matières isolantes (4) sur un matériau à conductivité électrique (5), suivant l'une quelconque des revendications de 12 à 14, dans laquelle les capteurs de mesure de distance (2, 3) sont disposés côte à côte et en face de l'objet de référence (7) ou de l'objet à mesurer et dans laquelle un capteur de mesure de distance (2 ou 3) fonctionne de manière capacitive ou optique tandis que l'autre capteur de mesure de distance (2 ou 3) fonctionne suivant le principe des courants de Foucault.

16. Utilisation d'un appareil de mesure d'épaisseur suivant l'une quelconque des revendications de 12 à 15, dans laquelle est prévue une mémoire de données (8) et dans laquelle les écarts entre l'épaisseur de consigne ($D_{ref}$) d'un objet de référence (7) et les valeurs mesurées par les capteurs, écarts résultant de la non-linéarité des capteurs de mesure de distance (2, 3), sont pour chaque position relative de l'objet de référence (7) mis sous forme digitalisée en mémoire en tant qu'erreurs de mesure attribuées aux valeurs de mesure des capteurs.

17. Utilisation d'un appareil de mesure d'épaisseur suivant la revendication 16, dans laquelle la mémoire de données (8) est organisée sous forme de mémoire matricielle à deux dimensions ou, compte tenu d'objets de référence d'épaisseurs variables, à trois dimensions.

**Fig. 1**

**Fig. 2**

Fig. 3

Fig. 4